# EUROPEAN PATENT SPECIFICATION

(11) **EP 2 535 656 B1**
(45) Date of publication and mention of the grant of the patent: **18.10.2017**
(21) Application number: 11009677.3
(22) Date of filing: 09.12.2011
(51) Int. Cl.: F24F 13/02, F16L 11/24

(54) **Adjustable air duct member**
Verstellbares Luftrohr
Tuyau d'air réglable

(30) Priority: 10.06.2011 CZ 201124467 U
(43) Date of publication of application: 19.12.2012
(73) Proprietor: Prihoda s.r.o., 53901 Hlinsko (CZ)
(72) Inventor: Bures, Michal, 53901 Hlinsko (CZ)
(74) Representative: Zemanová, Veronika

(56) References cited:
- AU-A1- 2008 201 178
- CA-A1- 2 380 885
- CN-Y- 201 162 892
- DE-U1- 8 305 178
- GR-B- 1 002 959
- US-A1- 2008 093 843
- US-A1- 2009 321 105

## Description

### Field of art

The invention relates to an adjustable air duct member for an air transportation and distribution, the duct member being made of a woven or nonwoven fabric or foil.

### State of art

Known air ducts for transportation and distribution of air, made of woven or nonwoven fabric or foil, also called textile diffusers, are made of material sewn together into closed shapes of various cross-sections. Usually, the cross-section is circular, but generally, the shape comprises always a part of a circle, or it consists of a combination of several of such parts. Newly on the market there are textile ducts with square or triangular cross- section, described for example in the Utility Model No. 216118.The duct is perforated in a certain way and when in operation it is inflated by the air flow, and the air is distributed through the perforations or through the material. These ducts are fastened by a mounting system to fixed parts of the building. Fastened and connected the textile duct forms a complex unit having fixed shape and dimensions.

A certain disadvantage of this system might occur if the real condition of the building does not allow an installation of the textile ducts as it was designed. In such situations it is necessary to adjust the textile ducts to have the desired shape and dimensions. However, that is not possible at the installation site, it is possible only at the manufacturer. Thus the time and the costs needed to complete the installation increases significantly.

The goal of the invention is to develop a textile duct or its part, which allows operational customization of its direction and length. At the same time, the benefits of textile or foil ducts, especially the possibility of washing in a washing machine, have to be maintained. US2009/321105 discloses an air duct according to the preamble of claim 1.

### Summary of the invention

These goals are solved and these deficiencies are eliminated to a large extent by an adjustable air duct member according to claim 1; in particular, the air duct being made of a woven or nonwoven textile or of a foil being provided with suitably designed adjustable air duct members according to the invention the principle of which is that the wall of the air duct member is provided with at least one tightening element for adjusting the length and / or the shape of the duct member. By tightening or loosening the tightening element the wall of the duct is shortened or extended. The surface of the duct is deformed thereby. When using several tightening elements it is possible to customize the shape and the length of the duct by combining various degrees of tightening of particular tightening elements.

Of course, it is possible to use a strip or a string as a tightening element, which extends along a wall of the duct member and which goes through the wall at points having an even or uneven spacing, so that the adjustment of the shape and / or the length of the air duct member is achieved by draping the material of the wall of the duct on the string and then by making knots with the string to fix the tightening of a part of the wall of the duct member. A more user-friendly and more purposeful embodiment comprises a guiding strip, which is fastened to the wall of the duct member and which forms a guiding sleeve, through which the tightening element extends. At the same time, the tightening element is provided with locking elements for fixing the position of the guiding sleeve outlet in respect to the tightening element, alternatively the tightening element is provided with a locking element near to an outlet of the guiding sleeve, while its opposite end is fastened to the wall of the duct member or to the guiding strip.

The tightening element may extend along the whole length of the duct member or it may extend along a part of the duct member only. The duct member may be provided with one tightening element, advantageously it is provided with a set of tightening elements, extending in the longitudinal direction of the duct member and being spaced apart evenly.

According to a preferred embodiment the locking element is a hinged clamp. It is also possible to use e.g. various buckles, clamps, clips, and self-tightening clamps and similar locking elements know e.g. from haberdashery.

It is advantageous to use a guiding strip made of the same material.

The duct member according to the invention, or parts of the duct member are provided with at least one tightening element which is arranged in a guiding means which is firmly attached to the wall of the duct member or in a guiding means formed e.g. by two layers of the material of the duct member sewed together to provide a guiding sleeve. The guiding may be provided also by sewing a long pocket on the wall, and the pocket may be made of the same material as the duct member.

Thus, the duct members are made to allow adjustment of their spatial direction. A very simple and practically well usable adaptability of the duct is ensured by means of the invention. The main advantage of this solution is the quick adaptability of the duct member to the local conditions, for example, when the actual configuration differs from that indicated in the design drawing etc.

### Brief description of the drawings

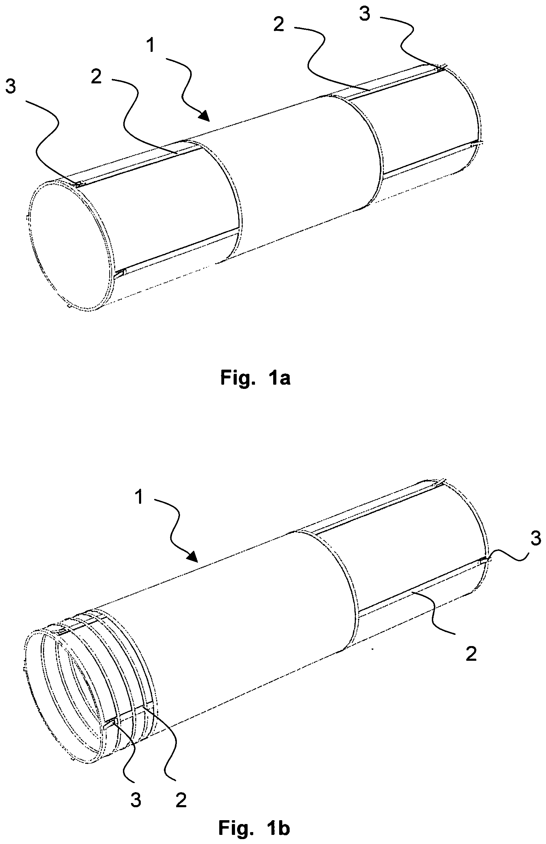

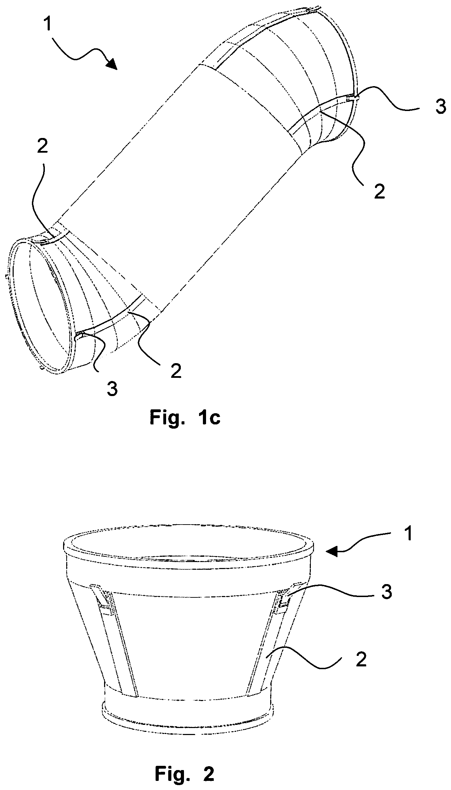

The invention is further explained by means drawings. Fig. 1a shows a duct member according to the invention in its basic (stretched) shape, Fig. 1b and 1c show examples of linear and structural modifications of the duct member of Fig. 1a, Fig. 2 is a further type of a duct member according to the invention.

### Exemplifying embodiments of the invention

Fig. 1a, 1b and 1c show a duct member **1** of an air duct for transportation or distribution of air, the duct member being made of a woven fabric having a hose shape, in this case comprising two adjustable sections. In each adjustable section, there are guiding strips **2** sewn on the duct member 1 in its longitudinal direction, the guiding strips **2** being made of the same material and forming guiding sleeves. According to the shown embodiment, there are four guiding strips **2** symmetrically laid out around the duct member **1**, and tightening elements are freely inserted inside. The length of the tightening elements in the guiding sleeve and thus the length of the final shape of the duct member **1** is ensured by means of hinged clamps, which form locking elements **3.**

Each guiding strip **2** in a specific adjustable section of the duct member 1 may be formed by a continuous strip, as shown in the Figures, but it can also be sectional, wherein there are several of the guiding strips **2** arranged in a row and spaced apart from each other in the longitudinal direction.

A shortening of the duct member **1** (Fig. 1a) is achieved by tightening all the tightening elements in the particular section of the duct member uniformly. In case of tightening some of the tightening elements more than the others in a particular section of the duct member **1** the shape of the duct member 1 is adjusted (Fig. 1b), for example for providing a pass for height change.

A further exemplary embodiment of the technical solution can be an adjustable reduction duct member **1** shown in Fig. 2.

### Industrial applicability

Air ducts containing the duct members according to the invention are industrially usable for an installation of the ventilation equipment, especially in places with higher demands on hygiene and cleanliness of work.

## Claims

1. An adjustable air duct member (1) made of a woven or nonwoven textile or a foil, wherein its wall is provided with at least one tightening element for adjusting the length and / or the shape of the duct member (1) and with a guiding sleeve through which the tightening element passes **characterized in that** the tightening element extends in the longitudinal direction of the air duct member.

2. The duct member (1) according to claim 1, **characterized in that** the guiding sleeve is formed by means of a guiding strip (2), which is fastened to the wall of the duct member (1).

3. The duct member (1) according to claim 2, **characterized in that** the tightening element is with its one end fastened to the wall of the duct member (1) and / or to the guiding strip (2).

4. The duct member (1) according to claim 2, **characterized in that** the tightening element is provided with at least one locking element (3) for securing the position of the guiding sleeve outlet in respect to the tightening element.

5. The duct member (1) according to any of claims 2 trough 4, **characterized in that** it is provided with a set of guiding strips (2) which form guiding sleeves extending in the longitudinal direction of the duct member (1).

6. The duct member (1) according to any of claims 1 through 5, **characterized in that** the locking element (3) is a hinged clamp.

7. The duct member (1) according to any of claims 1 through 6, **characterized in that** the tightening element is made of woven or nonwoven textile or foil.

8. The duct member (1) according to any of claims 2 through 7, **characterized in that** the guiding strip (2) is made of woven or nonwoven textile or foil.

9. The duct member (1) according to claim 1, **characterized in that** it comprises a double wall, the inner and outer parts of which are connected by at least one pair of seams defining the guiding sleeve for the tightening element.

## Patentansprüche

1. Ein einstellbares lufttechnisches Rohrleitungsteil (1), hergestellt aus einer gewebten oder ungewebten Textilie oder aus einer Folie, wobei die Wand des Rohrleitungsteils (1) mit wenigstens einem Festziehelement zur Einstellung der Länge und/oder der Form des Rohrleitungsteils sowie mit einer Führungshülse, durch die das Festziehelement hindurchgeht, versehen ist, **dadurch gekennzeichnet, dass** das Festziehelement sich in der Längsrichtung des Rohrleitungsteils erstreckt.

2. Das Rohrleitungsteil (1) nach Anspruch 1, **dadurch gekennzeichnet, dass** die Führungshülse von einem Führungstreifen (2) gebildet ist, der an der Wand des Rohrleitungsteils (1) befestigt ist.

3. Das Rohrleitungsteil (1) nach Anspruch 2, **dadurch gekennzeichnet, dass** das Festziehelement mit einem seiner Ende an der Wand des Rohrleitungsteils (1) und/oder an dem Führungstreifen (2) befestigt ist.

4. Das Rohrleitungsteil (1) nach Anspruch 2, **dadurch gekennzeichnet, dass** das Festziehelement mit wenigstens einem Verriegelungselement (3) versehen ist, das die Lage der Ausgangsöffnung der Führungshülse gegenüber dem Festziehelement feststellt.

5. Das Rohrleitungsteil (1) nach einem der Ansprüche 2 bis 4, **dadurch gekennzeichnet, dass** es mit einem Satz von Führungsstreifen (2) versehen ist, die die sich in der Längsrichtung des Rohrleitungsteils (1) erstreckenden Führungshülsen bilden.

6. Das Rohrleitungsteil (1) nach einem der Ansprüche 1 bis 5, **dadurch gekennzeichnet, dass** das Verriegelungselement (3) von einer aufklappbaren Klemme gebildet ist.

7. Das Rohrleitungsteil (1) nach einem der Ansprüche 1 bis 6, **dadurch gekennzeichnet, dass** das Festziehelement aus einer gewebten oder ungewebten Textilie oder aus einer Folie hergestellt ist.

8. Das Rohrleitungsteil (1) nach einem der Ansprüche 2 bis 7, **dadurch gekennzeichnet, dass** der Führungstreifen (2) aus einer gewebten oder ungewebten Textilie oder aus einer Folie hergestellt ist.

9. Das Rohrleitungsteil (1) nach Anspruch 1, **dadurch gekennzeichnet, dass** es eine Doppelwand umfasst, deren innerer Teil und äußerer Teil miteinander mittels wenigstens eines Paares von Nähten verbunden sind, wodurch die Führungshülse für das Festziehelement definiert ist.

## Revendications

1. Un élément (1) de conduit de l'air réglable constituée d'un textile tissé ou non-tissé ou d'une feuille, où sa paroi est munie d'au moins un élément de serrage pour ajuster la longueur et / ou la forme de l'élément (1) de conduit et d'un manchon de guidage à travers lequi l'élément de serrage passe, **caractérisé en ce que** l'élément de serrage passe l'élement de conduit de l'air dans la direction longitudinale.

2. L'élément (1) de conduit selon la revendication 1, **caractérisé en ce que** le manchon de guidage est formé au moyen d'une bande (2) de guidage qui est fixée à la paroi de l'élément (1) de conduit.

3. L'élément (1) de conduit selon la revendication 2, **caractérisé en ce que** l'élément de serrage est fixé avec une de ses extrémités à la paroi de l'élément (1) de conduit et / ou à la bande (2) de guidage.

4. L'élément (1) de conduit selon la revendication 2, **caractérisé en ce que** l'élément de serrage est pourvu d'au moins un élément (3) de verrouillage pour fixer la position de la sortie du manchon de guidage par rapport à l'élément de serrage.

5. L'élément (1) de conduit selon l'une quelconque des revendications 2 à 4, **caractérisé en ce qu'**il est muni d'un ensemble des bandes (2) de guidage qui forment des manchons de guidage passants l'élément (1) de conduit dans la direction longitudinale.

6. L'élément (1) de conduit selon l'une quelconque des revendications 1 à 5, **caractérisé en ce que** l'élément (3) de verrouillage est une agrafe articulée.

7. L'élément (1) de conduit selon l'une quelconque des revendications 1 à 6, **caractérisé en ce que** l'élément de serrage est en textile tissée ou non tissée ou réalisé d'une feuille.

8. L'élément (1) de conduit selon l'une quelconque des revendications 2 à 7, **caractérisé en ce que** la bande (2) de guidage est en textile tissée ou non tissée ou réalisé d'une feuille.

9. L'élément (1) de conduit selon la revendication 1, **caractérisé en ce qu'**il comporte une double paroi, dont les parties intérieure et extérieure sont reliées par au moins d'une paire des coutures définissant le manchon de guidage pour l'élément de serrage.
